# EUROPÄISCHE PATENTSCHRIFT

(11) **EP 2 859 255 B1**
(45) Veröffentlichungstag und Bekanntmachung des Hinweises auf die Patenterteilung: **30.12.2015**
(21) Anmeldenummer: 13733225.0
(22) Anmeldetag: 24.05.2013
(51) Int. Cl.: F16H 63/34

(54) **PARKSPERRE FÜR EIN GETRIEBE EINES KRAFTWAGENS**
PARKING LOCK FOR A GEARBOX OF A MOTOR VEHICLE
FREIN DE STATIONNEMENT POUR UNE BOÎTE DE VITESSES D'UN VÉHICULE AUTOMOBILE

(30) Priorität: 08.06.2012 DE 102012011424
(43) Veröffentlichungstag der Anmeldung: 15.04.2015
(73) Patentinhaber: Audi AG, 85045 Ingolstadt (DE)
(72) Erfinder: MERKLEIN, Harald, 85139 Wettstetten (DE)
(74) Vertreter: Wohnert, Dietmar
(86) Internationale Anmeldenummer: PCT/DE2013/000283
(87) Internationale Veröffentlichungsnummer: WO 2013/182181

(56) Entgegenhaltungen:
- EP-A1- 1 093 985
- WO-A1-2008/022617
- DE-A1-102005 002 446
- DE-A1-102007 010 940
- DE-A1-102007 011 359

## Beschreibung

Die Erfindung betrifft eine Parksperre für ein Getriebe, insbesondere ein Automatikgetriebe, eines Kraftwagens gemäß dem Oberbegriff des Patentanspruchs 1.

Eine solche Parksperre für ein Getriebe, insbesondere ein Automatikgetriebe, eines Kraftwagens ist der gattungsgemäßen DE 10 2005 002 446 A1 als bekannt zu entnehmen. Die Parksperre umfasst wenigstens ein über einen Stellantrieb betätigbares und über eine Federkraft in Verriegelungsstellung beaufschlagtes Sperrglied. Die Parksperre umfasst auch eine neben dem Stellantrieb vorgesehene, auf das Sperrglied mittels eines Sperrelements wirkende Haltevorrichtung, über die das Sperrglied unabhängig von dem Stellantrieb in seiner Entriegelungsstellung haltbar ist. Die Verriegelungsstellung ist eine Sperrstellung, in der wenigstens ein Getriebeelement des Getriebes gegen eine Drehung gesperrt ist. Die Entriegelungsstellung ist eine Freigabestellung, in welcher sich das Getriebeelement drehen kann.

Das Sperrglied ist dabei in zumindest einer Sicherungsstellung der Haltevorrichtung gegen eine Bewegung aus der Freigabestellung in die Sperrstellung gesichert. Die Haltevorrichtung umfasst einen Kniehebel mit einem ersten Kniehebelteil, einem Kniehebelgelenk und einem zweiten Kniehebelteil, wobei der Kniehebel in der Entriegelungsstellung des Sperrglieds mittels eines Sperrelements in einer nahezu gestreckten Stellung als die zumindest eine Sicherungsstellung verriegelt ist.

Die DE 10 2006 039 862 A1 offenbart eine Parksperreneinrichtung für Kraftfahrzeuggetriebe, insbesondere für Automatikgetriebe. Die Parksperreneinrichtung umfasst eine Parksperrenklinke mit Stelleinrichtung zum ein- bzw. ausrücken der Parksperrenklinke. Weiterhin ist eine Halteeinrichtung zur Sicherung der Parksperrenklinke in der ausgerückten Stellung vorgesehen. Die Halteeinrichtung umfasst ein Kniehebelgetriebe, wobei das Kniehebelgetriebe aus einer ersten, gestreckten Stellung, in welcher die Parksperrenklinke in der ausgerückten Position festgehalten ist, in eine zweite, angewinkelte Stellung bringbar ist, in welcher die Parksperrenklinke einrückbar ist.

Weiterhin ist aus der DE 10 2008 000 857 A1 ein Parksperrensystem für ein Automatikgetriebe eines Kraftfahrzeuges bekannt, wobei das Automatikgetriebe einen Aktuator aufweist, welcher ein Sperrelement im Automatikgetriebe auslegen kann. Das Sperrelement wird durch Federkraft in verriegelter Stellung gehalten. Es ist eine Verriegelungsvorrichtung vorgesehen, die über ein Stellglied mit dem Sperrelement verbunden ist und einen Kniehebel aufweist, welcher das Stellglied fixieren kann, so dass ein Einlegen des Sperrelements im Automatikgetriebe verhindert werden kann. Der Kniehebel ist in einem überstreckten Zustand des Stellglieds fixiert, wobei ein fester Gegenhalter auf der überstreckten Seite des Kniehebels angebracht ist.

Die DE 10 2005 057 794 A1 offenbart eine Vorrichtung zur Betätigung einer Parkbremse eines Fahrzeugs, mit einer Betätigungsmechanik und einem Aktuator, wobei die Betätigungsmechanik mittels einer Vorspannkraft in eine eingerückte Position drängbar ist und wobei mittels des Aktuators gegen die Vorspannkraft eine Bewegung der Betätigungsmechanik in eine ausgerückte Position ausführbar ist. Die Betätigungsmechanik weist einen drehbar um eine Achse gelagerten Parksperrenarm auf, welcher in der eingerückten Position formschlüssig in ein drehbar gelagertes Bauteil eingreift. Dabei ist vorgesehen, dass die Betätigungsmechanik eine Kniegelenkanordnung aufweist, wobei die Kniegelenkanordnung und der Parksperrenarm derart miteinander zusammenwirken, dass die Bewegung des Parksperrenarms von der Kniegelenkanordnung in Abhängigkeit einer Bewegung des Aktuators ausführbar ist. Eine Halteeinrichtung zum Sichern des Parksperrenarms in seiner ausgerückten Position ist nicht vorgesehen.

Des Weiteren offenbart auch die US 2008/0169168 A1 eine Parksperre für ein Automatikgetriebe eines Kraftwagens, mit einer um eine Schwenkachse zwischen einer Freigabestellung und einer Sperrstellung verschwenkbaren Parksperrenklinke. Zum Verstellen der Parksperrenklinke zwischen der Freigabestellung und der Sperrstellung ist eine Betätigungseinrichtung vorgesehen, welche eine Kniehebelanordnung umfasst, über die die Parksperrenklinke zwischen der Freigabestellung und der Sperrstelllung verstellbar ist. Wie bei der DE 10 2005 057 294 A1 ist keine Halteeinrichtung zum Sichern der Parksperrenklinke in der Freigabestellung vorgesehen, da die Betätigung des Parksperrenarms bzw. der Parksperrenklinke mechanisch, d. h. über eine mechanische Kopplung erfolgt.

Im Gegensatz dazu erfolgt die Betätigung der Parksperre bei modernen Fahrzeugen zunehmend nach dem sogenannten shift-by-wire-Prinzip. Dabei ist keinerlei mechanische Verbindung oder Kopplung zwischen der Parksperrenklinke und einem im Fahrgastraum des Kraftwagens angeordneten Betätigungsmittel zum Bewirken der Verstellung der Parksperrenklinke zwischen der Freigabestellung und der Sperrstellung mehr vorhanden. Vielmehr erfolgt eine Übertragung von Schaltbefehlen von dem Betätigungsmittel im Fahrgastraum meist ausschließlich mittels elektrischer oder elektronischer Signale.

Bei dem Betätigungsmittel handelt es sich beispielsweise um einen Knopf oder um einen Wählhebel zum Wählen von Fahrstufen des Getriebes. Wird der Knopf betätigt oder der Wählhebel in eine entsprechende Stellung verstellt, so wird ein elektronisches oder elektrisches Signal übertragen, wodurch beispielsweise ein Stellglied angesteuert wird. Durch diese Ansteuerung des Stellglieds erfolgt dann das Verstellen der Parksperrenklinke zwischen der Freigabestellung und der Sperrstellung mittels des Stellglieds.

Unabhängig von der Betätigungsart der Parksperrenklinke, d. h. über eine mechanische Kopplung oder über elektronische oder elektrische Signale, besteht jedoch die Anforderung, ein unbeabsichtigtes Verstellen der Parksperrenklinke von der Freigabestellung in die Sperrstellung - beispielsweise infolge einer Störung hydraulischer oder elektrischer Komponenten - insbesondere im Fahrbetrieb zu vermeiden. Es hat sich jedoch gezeigt, dass der Funktionserfüllungsumfang herkömmlicher Parksperren verbesserungswürdig ist.

Es ist daher Aufgabe der vorliegenden Erfindung, eine Parksperre für ein Getriebe, insbesondere ein Automatikgetriebe, eines Kraftwagens der eingangs genannten Art derart weiterzuentwickeln, dass die Parksperre einen erweiterten Funktionserfüllungsumfang aufweist.

Diese Aufgabe wird durch eine Parksperre mit den Merkmalen des Patentanspruchs 1 gelöst. Vorteilhafte Ausgestaltungen mit zweckmäßigen und nichttrivialen Weiterbildungen der Erfindung sind in den übrigen Ansprüchen angegeben.

Eine solche Parksperre für ein Getriebe, insbesondere ein Automatikgetriebe, eines Kraftwagens umfasst wenigstens ein zwischen einer Freigabestellung und einer Sperrstellung verstellbares Sperrglied. Mittels des Sperrglieds ist in der Sperrstellung wenigstens ein Getriebeelement des Getriebes gegen eine Drehung gesperrt. In der Freigabestellung des Sperrglieds kann das Getriebeelement um eine korrespondierende Drehachse gedreht werden.

Die Parksperre umfasst auch eine zumindest eine Sicherungsstellung aufweisende Halteeinrichtung, mittels welcher das Sperrglied in der zumindest einen Sicherungsstellung der Halteeinrichtung gegen eine Bewegung aus der Freigabestellung in die Sperrstellung gesichert ist.

Um nun einen besonders großen Funktionserfüllungsumfang zu schaffen, ist es erfindungsgemäß vorgesehen, dass die Halteeinrichtung wenigstens eine zweite Sicherungsstellung aufweist, in welcher das Sperrglied mittels der Halteeinrichtung auch gegen eine Bewegung aus der Sperrstellung in die Freigabestellung gesichert ist. Somit kann ein unbeabsichtigtes Verstellen des Sperrglieds sowohl aus der Freigabestellung in die Sperrstellung als auch dazu umgekehrt von der Sperrstellung in die Freigabestellung vermieden werden, wenn es beispielsweise zu einem Ausfall oder entsprechend einer unbeabsichtigten und aus einer Störung resultierenden Aktivierung einer Betätigungseinrichtung zum Verstellen des Sperrglieds kommt. Das Sperrglied ist dabei unabhängig von der Betätigungseinrichtung und insbesondere von dessen Funktionsfähigkeit sowohl in der Freigabestellung als auch in der Sperrstellung gesichert.

Durch die Möglichkeit, das Sperrglied auch in der Sperrstellung zu sichern, kann beispielsweise bei einer entsprechenden Störung vermieden werden, das die Parksperre einen unerwünschten Zustand einnimmt.

In vorteilhafter Ausgestaltung der Erfindung umfasst die Halteeinrichtung eine zwischen den Sicherungsstellungen verstellbare Hebelanordnung, insbesondere Kniehebelanordnung, mit wenigstens zwei gelenkig miteinander gekoppelten Hebelelementen. Ein erstes der Hebelelemente ist beispielsweise an einem Gehäuse des Getriebes um eine erste Schwenkachse relativ zu dem Gehäuse verschwenkbar gelagert. Das zweite Hebelelement ist beispielsweise an einem zumindest mittelbar mit dem Sperrglied verbundenen Betätigungselement, über welches das Sperrglied zwischen seiner Sperrstellung und seiner Freigabestellung verstellbar ist, um eine zweite Schwenkachse relativ zu dem Betätigungselement verschwenkbar verbunden.

Durch die Verwendung der Hebelanordnung können beispielsweise einerseits auch hohe Betätigungskräfte, insbesondere Federkräfte eines Federelements, die das Sperrglied in die oder in Richtung der Sperrstellung bewegen, abgestützt werden. Andererseits können Betätigungskräfte, um die Halteeinrichtung aus der jeweiligen Sicherungsstellung zu lösen, besonders gering gehalten werden. Dadurch kann die Halteeinrichtung besonders schnell, d. h. mit besonders geringen Reaktionszeiten aus der entsprechenden Sicherungsstellung bewegt werden, so dass das Sperrglied ebenfalls mit nur geringen Reaktionszeiten zwischen der Freigabestellung und der Sperrstellung bewegt werden kann. Darüber hinaus ist dadurch ein nur sehr geringer Bauraumbedarf der Parksperre realisierbar.

Um einen besonders großen Funktionserfüllungsumfang zu schaffen, hat es sich als vorteilhaft gezeigt, wenn die Halteeinrichtung wenigstens ein Sperrelement umfasst, mittels welchem die Hebelanordnung in wenigstens einer der Sicherungsstellungen gegen eine Verstellung in die entsprechend andere Sicherungsstellung gesperrt ist.

Bei dem Sperrelement handelt es sich vorzugsweise um ein Stellglied, beispielsweise um einen Elektromagneten, einen Fühlzylinder, einen magnetorheologisch blockierbaren Zylinder oder Rotor, um eine elektromagnetisch oder piezoelektrisch schaltbare Bremse, um eine elektromotorisch angetriebene Spindel oder einen Elektromotor. Dadurch ist auch ein definiertes und gewünschtes Lösen der einen Sicherungsstellung realisierbar.

In weiterer vorteilhafter Ausgestaltung der Erfindung weist die Halteeinrichtung wenigstens ein Betätigungselement auf, mittels welchem die Hebelanordnung von wenigstens einer der Sicherungsstellungen in die entsprechend andere Sicherungsstellung verstellbar ist. Hierdurch ist eine variable Verstellbarkeit der Halteeinrichtung geschaffen, so dass diese beispielsweise auch in und aus Zuständen, d. h. Stellungen bewegt werden kann, in denen Selbsthemmung, Selbstblockierung, eine Übertotpunktlage oder dergleichen Stellung vorliegt, in der eine Bewegung der Hebelanordnung zwischen den Sicherungsstellungen ohne Zutun des Betätigungselements nicht mehr möglich ist und in der jedoch auch besonders große, aus einer Störung resultierende und eine unerwünschte Verstellung des Sperrglieds bewirkende Kräfte abgestützt werden können, ohne dass es zu einer Verstellung des Sperrglieds kommt.

Um die Kosten der Parksperre besonders gering zu halten, ist vorzugsweise vorgesehen, dass das Betätigungselement ein Federelement ist oder ein Magnet, insbesondere ein Permanentmagnet ist. Alternativ kann vorgesehen sein, dass das Betätigungselement ein Stellglied, beispielsweise ein Elektromagnet, ein Elektromotor oder dergleichen ist. Hierdurch ist eine besonders variable und bedarfsgerechte Verstellung der Halteeinrichtung ermöglicht.

Zur Realisierung einer besonders geringen Teileanzahl, eines geringen Gewichts und eines geringen Bauraumbedarfs ist bei einer besonders vorteilhaften Ausführungsform vorgesehen, dass das Sperrelement als das Betätigungselement ausgebildet ist. Dies bedeutet, dass die Hebelanordnung mittels des Betätigungselements bzw. mittels des Sperrelements sowohl in der wenigstens einen Sicherungsstellung gegen eine Verstellung in die entsprechend andere Sicherungsstellung gesperrt als auch von wenigstens einer der Sicherungsstellungen in die entsprechend andere Sicherungsstellung verstellbar ist.

Bei einer weiteren, vorteilhaften Ausführungsform der Erfindung ist die erste Sicherungsstellung, in welcher das Sperrglied mittels der Halteeinrichtung gegen eine Bewegung aus der Freigabestellung in die Sperrstellung gesichert ist, bezogen auf eine Verstellung der Hebelanordnung aus der zweiten in die erste Sicherungsstellung, eine Vortotpunktlage der Hebelanordnung. Das Sperrglied kann somit, beispielsweise unter Federkraftbeaufschlagung mittels wenigstens eines Federelements, auf einfache Weise in die Sperrstellung bewegt werden, wenn die Sicherung der Hebelanordnung mittels des Sperrelements in der ersten Sicherungsstellung aufgehoben wird, d. h. wenn das Sperrelement die Bewegung der Hebelanordnung aus der ersten Sicherungsstellung ermöglicht.

Ist die zweite Sicherungsstellung bezogen auf eine Verstellung der Hebelanordnung aus der ersten in die zweite Sicherungsstellung eine Totpunktlage oder eine Übertotpunktlage der Hebelanordnung, so können bei Auftreten einer entsprechenden Störung mittels der sich in der zweiten Sicherungsstellung befindenden Hebelanordnung auch besonders hohe Kräfte abgestützt werden, ohne dass es zu einer unerwünschten Verstellung des Sperrglieds kommt.

Zur Realisierung einer definierten Lage und Ausrichtung der Hebelanordnung ist bei einer weiteren Ausführungsform der Erfindung vorgesehen, dass wenigstens ein Hebelelement der Hebelanordnung in wenigstens einer der Sicherungsstellungen an zumindest einem Anschlag anliegt. Dadurch können eine unkontrollierte Stellung und daraus resultierende Fehlfunktionen der Halteeinrichtung vermieden werden.

Hierbei ist zur Schaffung eines geringen Bauraumbedarfs und einer geringen Teileanzahl vorzugsweise vorgesehen, dass der Anschlag, an welchem das eine Hebelelement anliegt, am entsprechend anderen Hebelelement vorgesehen ist. Vorteilhafterweise ist der Anschlag durch das entsprechend andere Hebelelement gebildet.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Fig. alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:

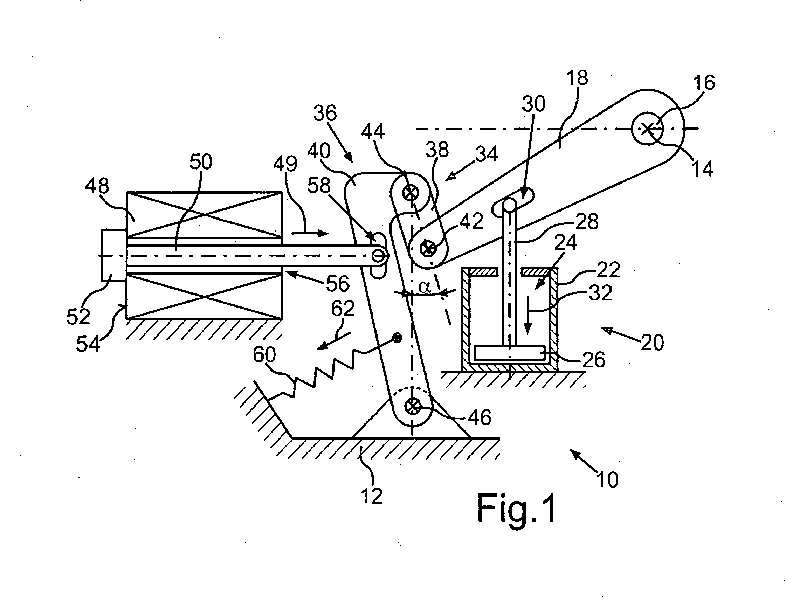

- Fig. 1: ausschnittsweise eine schematische Schnittdarstellung einer Parksperre für ein Getriebe, insbesondere ein Automatikgetriebe, eines Kraftwagens, mit einem zwischen einer Freigabestellung und einer Sperrstellung verstellbaren Sperrglied, mittels welchem in der Sperrstellung wenigstens ein Getriebeelement des Getriebes gegen eine Drehung gesperrt ist, und mit einer Halteeinrichtung, mittels welcher das Sperrglied sowohl gegen eine Bewegung aus der Freigabestellung in die Sperrstellung als auch gegen eine Bewegung aus der Sperrstellung in die Freigabestellung sicherbar ist, wobei sich das Sperrglied in der Freigabestellung befindet;
- Fig. 2: ausschnittsweise eine schematische Schnittansicht der Parksperre gemäß Fig. 1, wobei sich das Sperrglied in der Sperrstellung befindet;
- Fig. 3: ausschnittsweise eine schematische Schnittansicht einer weiteren Ausführungsform der Parksperre gemäß Fig. 2;
- Fig. 4: ausschnittsweise eine schematische Schnittansicht einer weiteren Ausführungsform der Parksperre gemäß Fig. 1;
- Fig. 5: ausschnittsweise eine weitere schematische Schnittansicht der Parksperre gemäß Fig. 4, wobei sich das Sperrglied in der Sperrstellung befindet;
- Fig. 6: ausschnittsweise eine schematische Schnittansicht einer weiteren Ausführungsform der Parksperre gemäß Fig. 1;
- Fig. 7: ausschnittsweise eine weitere schematische Schnittansicht der Parksperre gemäß Fig. 6, wobei sich das Sperrglied in der Sperrstellung befindet;
- Fig. 8: ausschnittsweise eine schematische Perspektivansicht der Parksperre gemäß Fig. 4; und
- Fig. 9: ausschnittsweise eine weitere schematische Schnittansicht der Parksperre gemäß Fig. 8, wobei sich das Sperrglied in der Sperrstellung befindet.

Fig. 1 zeigt ausschnittsweise eine Parksperre 10 für ein Automatikgetriebe eines Personenkraftwagens. Die Parksperre 10 umfasst ein in Fig. 1 nicht erkennbares Sperrglied beispielsweise in Form einer Parksperrenklinke sowie ein Parksperrenrad, welches mit einem um eine Drehachse drehbaren Getriebeelement und über dieses mit einem Antriebsstrang des Personenkraftwagens drehfest verbunden ist. Das Sperrglied (Parksperrenklinke) ist dabei zwischen wenigstens einer Freigabestellung und wenigstens einer Sperrstellung verstellbar. In der Sperrstellung wirkt das Sperrglied mit dem Parksperrenrad zusammen, so dass das Getriebeelement und somit der Antriebsstrang gegen eine Drehung gesichert sind.

Zum Zusammenwirken des Sperrglieds mit dem Parksperrenrad greift das Sperrglied beispielsweise in eine außenumfangsseitige Ausnehmung des Parksperrenrads ein, so dass das Sperrglied mit dem Parksperrenrad formschlüssig verbunden ist.

Zum Verstellen des Sperrglieds zwischen der Freigabestellung und der Sperrstellung ist dieses an einem in Fig. 1 sehr schematisch dargestellten Gehäuse 12 des Automatikgetriebes um eine erste Schwenkachse 14 relativ zum Gehäuse 12 schwenkbar gelagert. Auch das Getriebeelement und damit das Parksperrenrad sind um eine korrespondierende Drehachse relativ zum Gehäuse 12 drehbar gelagert.

Die Verstellung des Sperrglieds erfolgt vorliegend mittels einer Parksperrenbetätigungswelle, welche als Getriebeschaltwelle 16 bezeichnet und am Gehäuse 12 um die erste Schwenkachse 14 relativ zum Gehäuse 12 drehbar gelagert ist.

Mit der Getriebeschaltwelle 16 ist ein Hebelelement 18 drehfest verbunden, welches um die erste Schwenkachse 14 relativ zum Gehäuse 12 verschwenkbar ist und über welches die Getriebeschaltwelle 16 drehbar und somit das Sperrglied verstellbar ist. Gemäß Fig. 1 befindet sich das Sperrglied in seiner Freigabestellung. Mit anderen Worten ist das Sperrglied ausgelegt.

Zum Bewirken der Verstellung des Sperrglieds ist eine Betätigungseinrichtung 20 der Parksperre 10 vorgesehen. Die Betätigungseinrichtung 20 umfasst einen Zylinder 22 mit einem Arbeitskammer 24, in welchem ein Kolben 26 der Betätigungseinrichtung 20 relativ zu dem Zylinder 22 translatorisch verschiebbar aufgenommen ist. Der Zylinder 22 ist am Gehäuse 12 befestigt.

Der Kolben 26 ist mit einer Kolbenstange 28 verbunden. Die Kolbenstange 28 greift in eine als Langloch 30 ausgebildete Ausnehmung des Hebelelements 18 ein. Dadurch kann durch translatorisches Bewegen des Kolbens 26 das Hebelelement 18 um die erste Schwenkachse 14 verschwenkt werden, wobei sich die Kolbenstange 28 zum Ausgleich eines Winkelversatzes in dem Langloch 30 hinund herbewegen kann.

Die Parksperre umfasst wenigstens ein in Fig. 1 nicht erkennbares Betätigungsfederelement, welches in der Freigabestellung vorgespannt ist und das Sperrglied mit einer Federkraft beaufschlagt, mittels welcher das Sperrglied in die Sperrstellung bewegbar ist. Zum Bewegen des Sperrglieds aus der Sperrstellung in die Freigabestellung, d. h. zum Auslegen des Sperrglieds, wird die Arbeitskammer 24 mit einem Hydraulikfluid, insbesondere Öl, beaufschlagt, so dass der Kolben 26 wie in Fig. 1 durch einen Richtungspfeil 32 angedeutet ist, bewegt wird. Dadurch wird das Hebelelement 18 entgegen der Federkraftbeaufschlagung durch das Betätigungsfederelement, d. h. unter Spannung des Betätigungsfederelements bezogen auf die Bildebene von Fig. 1 gegen den Uhrzeigersinn verschwenkt. Um das Sperrglied in der Freigabestellung zu halten, wird die Druckbeaufschlagung der Arbeitskammer 24 und somit des Kolbens 26 beibehalten.

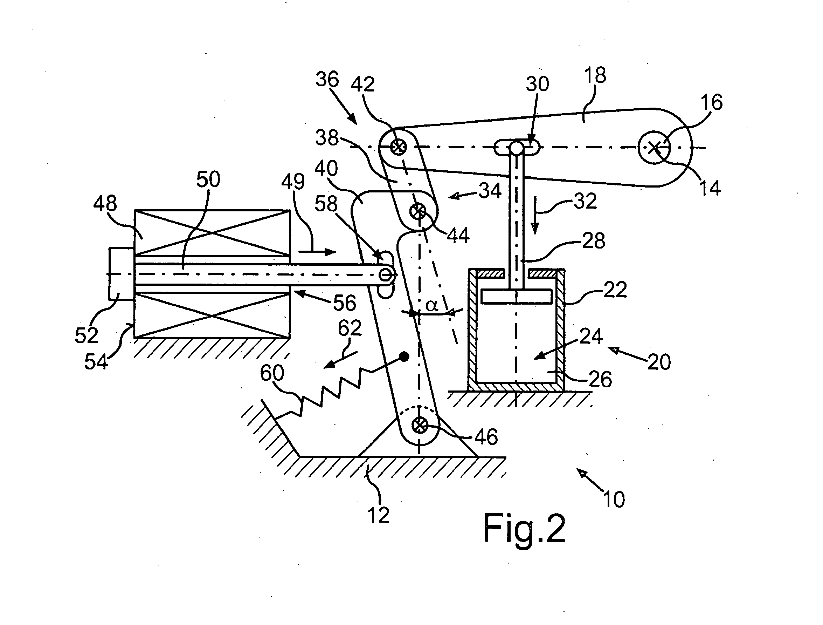

Um nun - beispielsweise bei Ausfall einer Hydraulikeinrichtung des Personenkraftwagens und somit bei Abfall des Hydraulikdrucks in der Arbeitskammer 24 - eine unbeabsichtigte Verstellung des Sperrglieds aus der Freigabestellung in die Sperrstellung zu vermeiden, umfasst die Parksperre 10 eine Halteeinrichtung 34. Die Halteeinrichtung 34 ist dabei zwischen einer in Fig. 1 gezeigten, ersten Sicherungsstellung und einer in Fig. 2 gezeigten, zweiten Sicherungsstellung verstellbar. In der ersten Sicherungsstellung ist das Sperrglied mittels der Halteeinrichtung 34 unabhängig von der Betätigungseinrichtung 20 gegen eine Bewegung bzw. Verstellung aus der Freigabestellung in die Sperrstellung gesichert.

Dazu umfasst die Halteeinrichtung 34 eine Hebelanordnung 36 in Form einer Kniehebelanordnung mit einem ersten Kniehebelelement 38 und einem zweiten Kniehebelelement 40. Das erste Kniehebelelement 38 ist ein Koppelhebel, welcher einerseits mit dem Hebelelement 18 um eine zweite Schwenkachse 42 relativ zu dem Hebelelement 18 verschwenkbar verbunden ist. Andererseits ist das erste Kniehebelelement 38 mit dem zweiten Kniehebelelement 40 um eine dritte Schwenkachse 44 relativ zu dem zweiten Kniehebelelement 40 verschwenkbar gekoppelt.

Das einerseits gelenkig mit dem ersten Kniehebelelement 38 gekoppelte, zweite Kniehebelelement 40 ist andererseits am Gehäuse 12 um eine vierte Schwenkachse 46 relativ zum Gehäuse 12 verschwenkbar zumindest mittelbar am Gehäuse 12 gelagert. Durch das Hebelelement 18, die Kniehebelelemente 38, 40 und ihre entsprechenden, gelenkigen Kopplungen mit den Schwenkachsen 14, 42, 44, 46 ist somit ein Kniehebel mit einem Viergelenk geschaffen.

Die Halteeinrichtung 34 umfasst auch ein Sperrelement 48, mittels welchem die Hebelanordnung 36 in der ersten Sicherungsstellung gegen eine Verstellung in die zweite Sicherungsstellung gesperrt, d. h. gesichert ist.

Das Sperrelement 48 ist am Gehäuse 12 befestigt und vorliegend als Stellglied in Form eines Elektromagneten ausgebildet. Dem Elektromagneten ist eine Koppelstange 50 zugeordnet. Wie Fig. 1 zu entnehmen ist, ist die Koppelstange 50 durch eine korrespondierende Durchgangsöffnung 56 des Elektromagneten hindurchgeführt und weist einen Anschlag 52 auf, über den sie auf einer der Hebelanordnung 36 abgewandten Stirnseite 54 des Elektromagneten an diesem abstützbar.

Die Koppelstange 50 wirkt als Magnetanker kann dadurch mit dem Elektromagneten (Sperrelement 48) zusammenwirken, indem der Elektromagnet die Koppelstange 50 magnetisch anzieht und festhält. An einem dem Anschlag 52 abgewandten Ende ist die Koppelstange 50 mit dem zweiten Kniehebelelement 40 gekoppelt. Dazu greift die Koppelstange 50 in eine als Langloch 58 ausgebildete Ausnehmung des zweiten Kniehebelelements 40 ein.

Da die Koppelstange 50 translatorisch relativ zum Gehäuse 12 bewegbar ist, während das zweite Kniehebelelement 40 relativ zum Gehäuse 12 rotatorisch bewegbar ist, dient das Langloch 58 zum Ausgleich eines Winkelversatzes. Mit anderen Worten kann sich die Koppelstange 50 im Langloch 58 bewegen.

Wie anhand Fig. 1 zu erkennen ist, stellt sich in der zumindest einen, ersten Sicherungsstellung zwischen jeweiligen Kraftrichtungen der Kniehebelelemente 38, 40 ein relativ kleiner Winkel α ein, welcher vorzugsweise kleiner als 10 Grad ist. Bei der ersten Sicherungsstellung handelt es sich bezogen auf eine Verstellung der Hebelanordnung 36 aus der zweiten in die erste Sicherungsstellung um eine Vortotpunktlage der Hebelanordnung 36.

Zum Sichern der Freigabestellung zieht der Elektromagnet den Anschlag 52 an, so dass er an der Stirnseite 54 abgestützt und die Koppelstange 50 und darüber die Hebelanordnung 36, das Hebelelement 18 und das Sperrglied gegen eine unerwünschte Bewegung aus der Freigabestellung in die Sperrstellung gesichert sind. Mit anderen Worten, würde nun die Druckbeaufschlagung des Kolbens 26 ausfallen, so würde zwar das Betätigungsfederelement ein Drehmoment um die vierte Schwenkachse 46 entgegen dem Uhrzeigersinn auf das zweite Kniehebelelement 40 ausüben, woraus eine den Anschlag 52 von der Stirnseite 54 wegbewegende Kraft resultierte, jedoch würde ein solches Wegbewegen durch Anziehen des Anschlags 52 mittels des Elektromagneten verhindert werden. Dies bedeutet, dass sich das zweite Kniehebelelement 40 auch unter Last von dem beispielsweise als Drehfeder ausgebildeten Betätigungsfederelement nicht entgegen der Uhrzeigerrichtung drehen lässt.

Beispielsweise ist es auch möglich, dass das als Sperraktuator wirkende Sperrelement 48 alternativ am ersten Kniehebelelement 38 angreift und die Hebelanordnung 36 und darüber das Sperrglied über das erste Kniehebelelement 38 sperrt.

Das Sperrelement 48 kann alternativ als Fluidzylinder, magnetorheologisch blockierbarer Zylinder oder Rotor, elektromagnetisch oder piezoelektrisch schaltbare Bremse, elektromotorisch angetriebene Spindel und/oder als anderweitiges Stellglied ausgebildet sein. Ferner ist es möglich, dass das Sperrelement 48 direkt auf die vierte Schwenkachse 46 des zweiten Kniehebelelements 40 wirkt.

Der Anschlag 52 dient vorliegend insbesondere zum Einstellen des Winkels α. Jedoch ist auch die Anordnung des Anschlags 52 variabel. Ein solcher Anschlag kann beispielsweise zwischen den Kniehebelelementen 38, 40 vorgesehen sein.

Zum Unterstützen der Bewegung des zweiten Kniehebelelements 40 entgegen dem Uhrzeigersinn und somit zum Unterstützen der Bewegung oder Verstellung der Hebelanordnung 36 aus der ersten in die zweite Sicherungsstellung ist ein optionales Betätigungselement in Form eines Federelements 60 vorgesehen. Das Federelement 60 ist vorliegend einerseits zumindest mittelbar am Gehäuse 12 und andererseits zumindest mittelbar, insbesondere direkt, mit dem zweiten Kniehebelelement 40 verbunden. In der ersten Sicherungsstellung ist das Federelement 60 - wie in Fig. 1 durch einen Richtungspfeil 62 angedeutet ist - vorgespannt, so dass die Hebelanordnung 36 mittels des Federelements 60 mit einer Federkraft beaufschlagt ist, mittels welcher die Hebelanordnung 36 unterstützend aus der ersten Sicherungsstellung bewegbar ist.

In Fig. 1 ist eine Magnetkraft mittels eines Richtungspfeils 49 veranschaulicht, welche der Elektromagnet (Sperrelement 48) der den Anschlag 52 über die Koppelstange 50 von der Stirnseite 54 wegbewegenden Kraft entgegensetzt.

Die Halteeinrichtung 34 weist einen besonders einfachen und somit kostengünstigen Aufbau auf. Durch den nur relativ kleinen Winkel α zwischen den Kniehebelelementen 38, 40 wird zumindest nahezu ein gesamtes, durch das Betätigungsfederelement bewirktes Drehmoment über die Lagerung des zweiten Kniehebelelements 40 auf das Gehäuse 12 abgestützt. Der Elektromagnet (Sperrelement 48) benötigt dabei nur eine relativ geringe Kraft, um unter Last, d. h. bei Ausfall der Druckbeaufschlagung des Kolbens 26, die erwünschte Winkelposition der Kniehebelelemente 38, 40 aufrecht zu erhalten.

Ein weiterer Vorteil ist, dass das Sperrglied auf einfache Weise derart aus der Freigabestellung in die Sperrstellung bewegbar ist, dass das Sperrelement 48 deaktiviert wird und den Anschlag 52 und somit die Koppelstange 50 freigibt. Dann wird das Sperrglied mittels des vorgespannten Betätigungsfederelements in die Sperrstellung verstellt. Weiterhin ist keine Öffnungsfeder für ein stromloses Öffnen der Parksperre 10 erforderlich. Ein weiterer Vorteil ist, dass die Parksperre 10 zumindest im Wesentlichen verzögerungsfrei öffnet, sobald das Sperrelement 48 abgeschaltet wird, wie es beispielsweise beim Abschalten des Elektromagneten der Fall ist.

Fig. 2 zeigt die Halteeinrichtung 34 in ihrer zweiten Sicherungsstellung. In der zweiten Sicherungsstellung ist das Sperrglied unabhängig von der Betätigungseinrichtung 20 in der Sperrstellung gesichert. Kommt es beispielsweise zu einer Störung der Hydraulikeinrichtung des Personenkraftwagens, in deren Folge der Kolben 26 mit Druck beaufschlagt wird, so kann sich das Sperrglied aufgrund der Sicherung durch die Halteeinrichtung 34 dennoch nicht in die Freigabestellung bewegen.

Wie anhand von Fig. 2 zu erkennen ist, handelt es sich bei der zweiten Sicherungsstellung bezogen auf eine Verstellung der Hebelanordnung 36 aus der ersten in die zweite Sicherungsstellung um eine Übertotpunktlage der Hebelanordnung. In dieser Übertotpunktlage könnte sich das Sperrglied ohne Zutun des Federelements 60 auch dann nicht in seine Freigabestellung bewegen, wenn das Sperrelement 48 deaktiviert wäre und somit die Koppelstange 50 und damit die Hebelanordnung 36 über den Anschlag 52 nicht festgehalten werden würden. Eine zumindest nahezu gesamte, aus der unbeabsichtigten Druckbeaufschlagung des Kolbens 26 resultierende Kraft kann über die Lagerung des zweiten Kniehebelelements 40 sowie über den Anschlag 52 am Gehäuse 12 abgestützt werden. Gleichzeitig reicht eine demgegenüber nur sehr geringe Lösekraft aus, welche vom Betätigungselement in Form des Federelements 60 aufzuwenden ist, um die Hebelanordnung 36 bei deaktiviertem Sperrelement 48 aus dieser Übertotpunktlage über den Totpunkt hinaus in Richtung der ersten Sicherungsstellung zu bewegen. Mit anderen Worten kann das Überdrehen der Hebelanordnung 36 aus der zweiten Sicherungsstellung, d. h. aus dem Übertotpunkt zurück, mittels des Federelements 60 erzielt werden, wenn das Sperrelement 48 deaktiviert ist.

Das Betätigungselement (Federelement 60) kann alternativ auch am ersten Kniehebelelement 38 oder an der Koppelstange 50 des Sperrelements 48 angreifen. Eine weitere Variante des Anschlags 52 ist beispielsweise die direkte Abstützung des Hebelelements 18 und des zweiten Kniehebelelements 40.

Die Sicherung durch die Übertotpunktlage bewirkt insbesondere den Vorteil, dass beliebig hohe Drehmomente und/oder Kräfte ohne Belastung des Sperrelements 48 abgestützt werden können. Ferner muss das Sperrelement 48 unabhängig von einer etwaig von der Betätigungseinrichtung 20 ausgeübten Kraft keine allzu hohen Kräfte aufbringen können. Des Weiteren sind auch vom Betätigungselement (Federelement 60) keine allzu hohen Kräfte aufzubringen.

Das Sperrelement 48 kann dabei auch als das Betätigungselement ausgebildet sein. Mit anderen Worten kann das Bewegen der Hebelanordnung 36 aus der Übertotpunktlage auch beispielsweise durch das Sperrelement 48, insbesondere den Elektromagneten, bewirkt werden. Dazu wird die Koppelstange 50 entgegen dem Richtungspfeil 49 bewegt, so dass der Anschlag 52 von der Stirnseite 54 abhebt. Das Sperrelement 48 kann hierbei als Stellglied wirken. Zum Beispiel kann der Elektromagnet so ausgelegt sein, dass er die Koppelstange 50 in zwei entgegengesetzte Richtungen antreiben kann. Wie Fig. 2 zu entnehmen ist, ist auch in der zweiten Sicherungsstellung zwischen den Kraftrichtungen der Kniehebelelemente 38, 40 der Winkel α eingestellt.

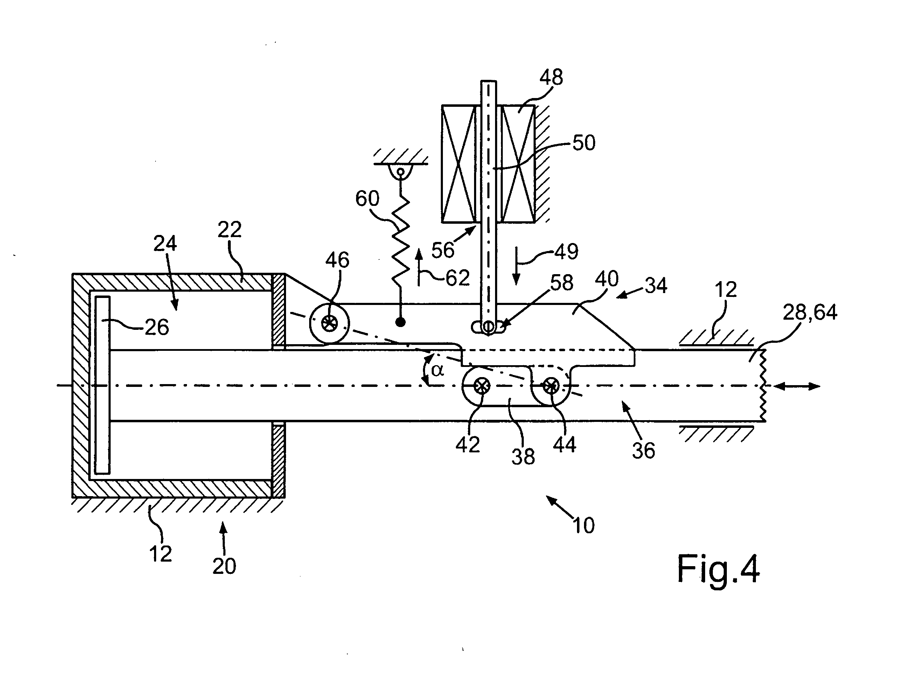

Das anhand von Fig. 1 und 2 geschilderte Prinzip der Parksperre 10 kann auch ohne weiteres auf ein Sperrglied der Parksperre 10 übertragen werden, welches translatorisch, d. h. linear zwischen der Freigabestellung und der Sperrstellung verstellbar ist. In diesem Fall entfällt beispielsweise das Hebelelement 18, und das erste Kniehebelelement 38 ist stattdessen mit einem linear bewegbaren und mit dem Sperrglied verbundenen Betätigungselement gelenkig verbunden. Dies wird insbesondere anhand von Fig. 4, 5, 8 und 9 beschrieben.

Weiterhin kann vorgesehen sein, dass wenigstens eine der Lagerungen und/oder Verbindungsstellen der Parksperre 10 und insbesondere der Halteeinrichtung 34 als Langloch oder mit großem Radialspiel ausgeführt ist, so dass zusätzlich zu der entsprechenden Drehbewegung auch wenigstens eine lineare Bewegung als Relativbewegung zwischen den jeweiligen Einzelteilen möglich ist. Wird zum Beispiel die Lagerstelle zwischen dem Hebelelement 18 und dem ersten Kniehebelelement 38 als Langloch ausgebildet, so sind Überwege der Getriebeschaltwelle 16 über die gesicherten Stellungen hinaus ohne Einfluss auf die Halteeinrichtung 34 möglich.

Anstelle der Übertotpunktlage ist auch die Einstellung der Totpunktlage in der zweiten Sicherungsstellung möglich, wobei in der Übertotpunktlage definiertere Winkel- und Kraftverhältnisse vorliegen. Hierbei dient das Sperrelement 48 im Zusammenspiel mit dem Federelement 60 insbesondere zum Bewegen der Hebelanordnung 36 bzw. zum Bewirken einer Bewegung der Hebelanordnung 36 aus der zweiten Sicherungsstellung.

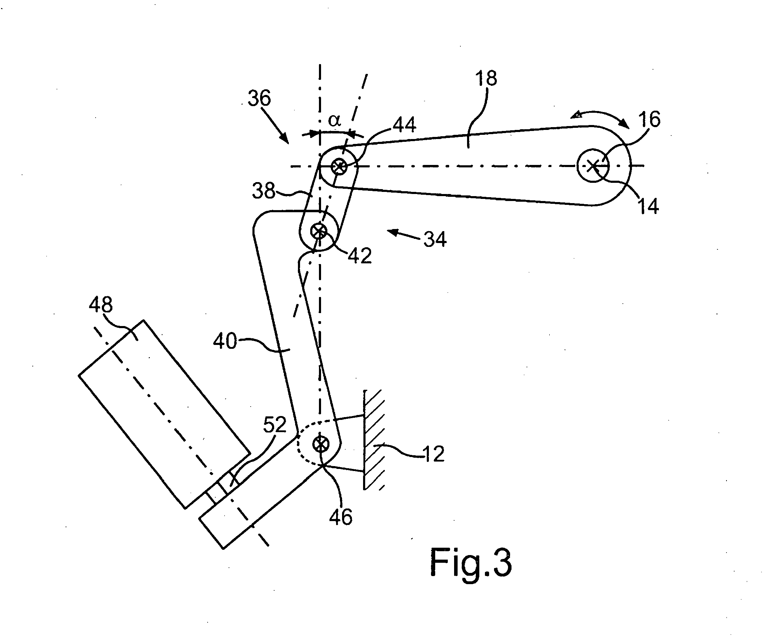

Fig. 3 zeigt eine alternative Ausführungsform der Parksperre 10. Wie anhand von Fig. 3 erkennbar ist, kann das als Elektromagnet ausgebildete Sperrelement 48 als Haftmagnet direkt mit dem zweiten Kniehebelelement 40 zusammenwirken. Durch Aktivieren des Elektromagneten zieht dieser das zweite Kniehebelelement 40 direkt an und hält so die Hebelanordnung 36 in ihrer entsprechenden Sicherungsstellung.

Hierbei handelt es sich vorzugsweise um die erste Sicherungsstellung, wobei sich das Sperrglied in seiner Freigabestellung befindet. Wie zu erkennen ist, befinden sich die Kniehebelelemente 38, 40 in ihrer Vortotpunktlage, wodurch es bei Deaktivieren des Elektromagneten und der Federkraftbeaufschlagung durch das Betätigungsfederelement zu einem stromlosen Öffnen der Halteeinrichtung 34 kommt, so dass sich das Sperrglied aus seiner Freigabestellung in seine Sperrstellung bewegen kann.

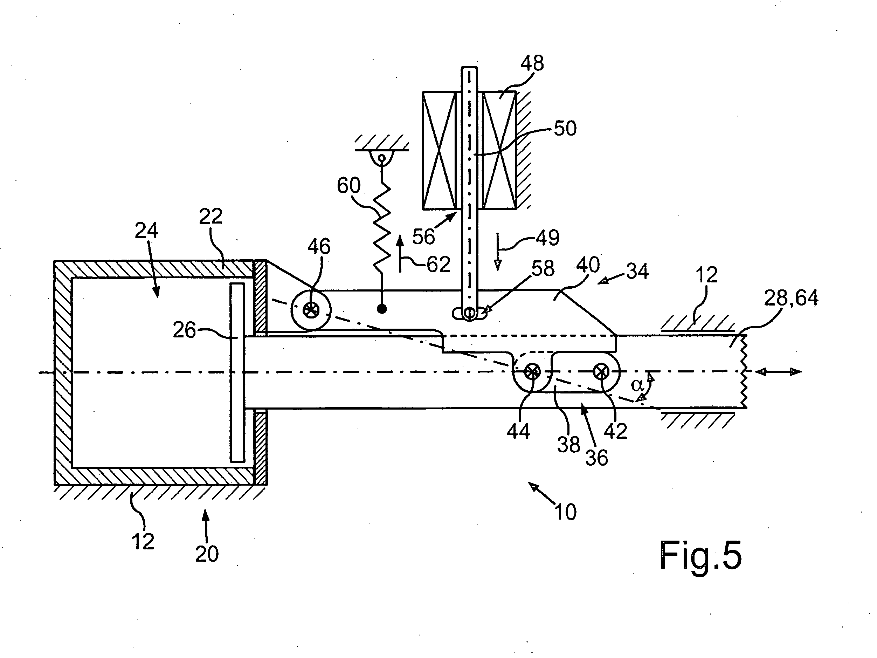

Fig. 4 und 5 veranschaulichen die Parksperre 10 gemäß Fig. 1 und 2, übertragen auf eine translatorische, d. h. lineare Betätigung des Sperrglieds. Das Sperrglied ist hierbei mit einem Betätigungselement 64 verbunden, welches relativ zum Gehäuse 12 translatorisch bewegbar ist. Das Betätigungselement 64 ist gleichzeitig die Kolbenstange 28.

Das zweite Kniehebelelement 40 ist mit dem Zylinder 22 um die vierte Schwenkachse 46 relativ zum Zylinder 22 verschwenkbar verbunden und über den Zylinder 22 am Gehäuse 12 gelagert.

Gemäß Fig. 4 befindet sich das Sperrglied in seiner Freigabestellung, wobei sich die Halteeinrichtung 34 in ihrer ersten Sicherungsstellung befindet. Dementsprechend befindet sich das Sperrglied gemäß Fig. 5 in seiner Sperrstellung, wobei sich die Halteeinrichtung 34 in ihrer zweiten Sicherungsstellung befindet.

Damit das Federelement 60 das zweite Kniehebelelement 40 entgegen dem Uhrzeigersinn drehen kann, wird das Sperrelement 48 deaktiviert, so dass sich der Anschlag 52 von der Stirnseite 54 wegbewegen kann. Bei der Parksperre 10 gemäß Fig. 3 fungiert der Elektromagnet auch gleichzeitig als Anschlag, um eine definierte Ausrichtung der Hebelanordnung 36 in den Sicherungsstellungen zu gewährleisten.

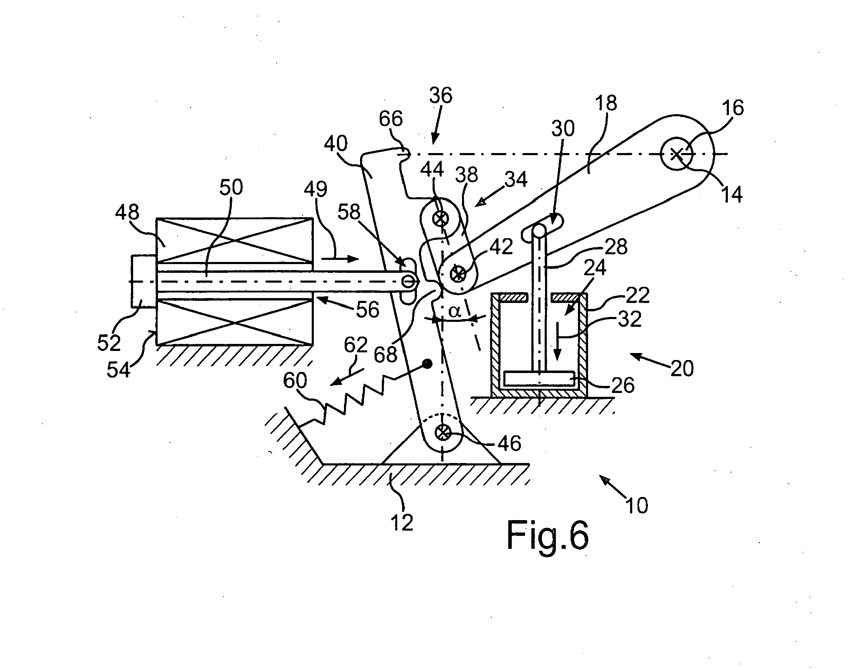

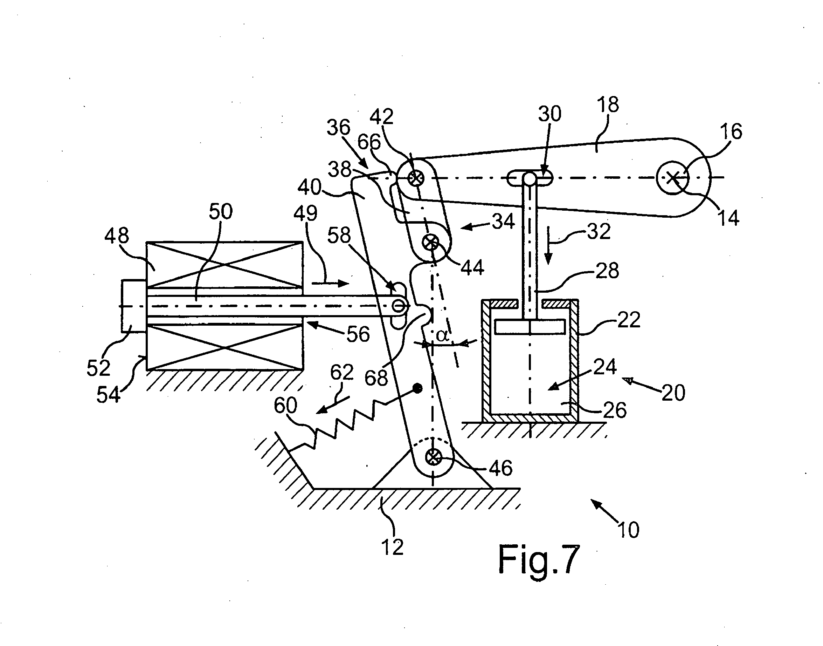

Fig. 6 und 7 zeigen eine weitere Ausführungsform der Parksperre 10 gemäß Fig. 1 und 2. Wie anhand von Fig. 6 erkennbar ist, sind am zweiten Kniehebelelement 40 Anschläge 66, 68 vorgesehen. Die Anschläge 66, 68 sind dabei durch das zweite Kniehebelelement 40 gebildet. In der in Fig. 6 gezeigten, ersten Sicherungsstellung liegt das erste Kniehebelelement 38 am Anschlag 68 des zweiten Kniehebelelements 40 an. In der in Fig. 7 gezeigten, zweiten Sicherungsstellung liegt das erste Kniehebelelement 38 am Anschlag 66 des zweiten Kniehebelelements 40 an.

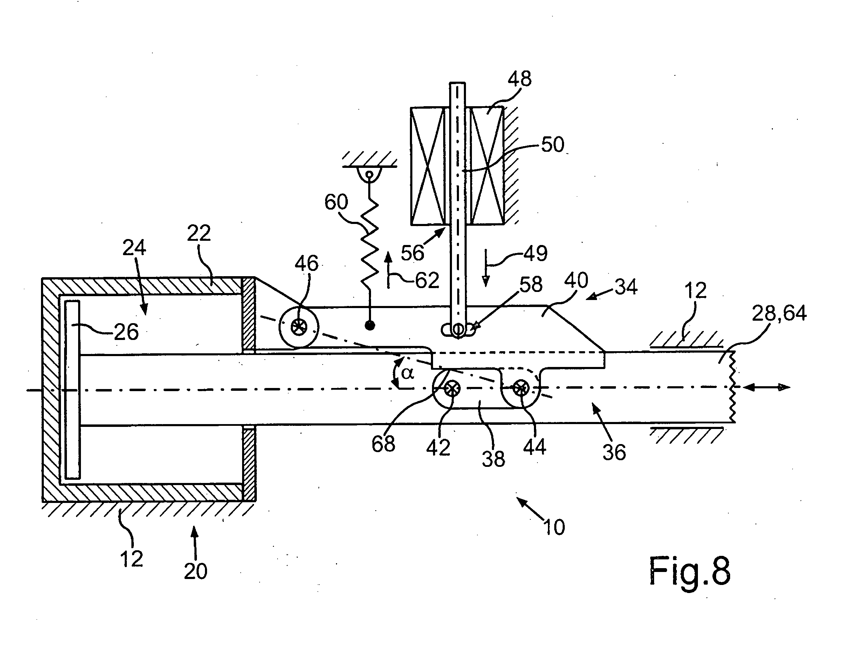

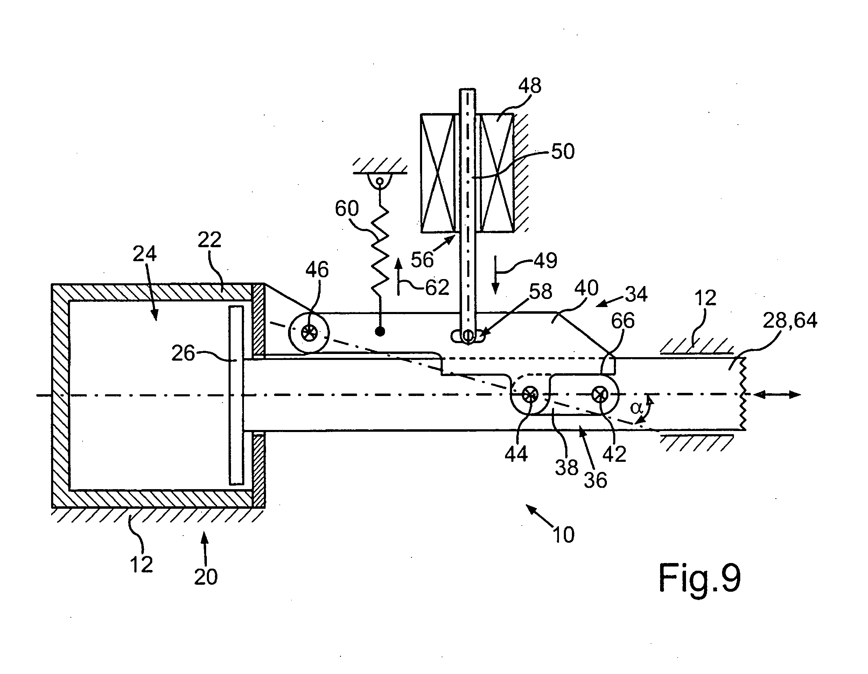

Dementsprechend zeigen auch Fig. 8 und 9 weitere Ausführungsformen der Parksperre 10 gemäß Fig. 4 und 5. In der in Fig. 8 gezeigten, ersten Sicherungsstellung liegen die Kniehebelelemente 38, 40 über den Anschlag 68 aneinander an, während sich die Kniehebelelemente 38, 40 in der in Fig. 9 gezeigten, zweiten Sicherungsstellung über den Anschlag 66 aneinander abstützen. Auch hierbei sind die Anschläge 66, 68 beispielsweise durch das zweite Kniehebelelement 40 gebildet. Sie können jedoch auch am ersten Kniehebelelement 38 vorgesehen und insbesondere durch das erste Kniehebelelement 38 gebildet sein.

## Patentansprüche

1. Parksperre (10) für ein Getriebe, insbesondere ein Automatikgetriebe, eines Kraftwagens, mit wenigstens einem zwischen wenigstens einer Freigabestellung und wenigstens einer Sperrstellung verstellbaren Sperrglied, mittels welchem in der Sperrstellung wenigstens ein Getriebeelement des Getriebes gegen eine Drehung gesperrt ist, und mit einer zumindest eine Sicherungsstellung aufweisenden Halteeinrichtung (34), mittels welcher das Sperrglied in der zumindest einen Sicherungsstellung der Halteeinrichtung (34) gegen eine Bewegung aus der Freigabestellung in die Sperrstellung gesichert ist,
**dadurch gekennzeichnet, dass**
die Halteeinrichtung (34) wenigstens ein zweite Sicherungsstellung aufweist, in welcher das Sperrglied mittels der Halteeinrichtung (34) gegen eine Bewegung aus der Sperrstellung in die Freigabestellung gesichert ist.

2. Parksperre (10) nach Anspruch 1,
**dadurch gekennzeichnet, dass**
die Halteeinrichtung (34) eine zwischen den Sicherungsstellungen verstellbare Hebelanordnung (36), insbesondere Kniehebelanordnung (36), mit wenigstens zwei gelenkig miteinander gekoppelten Hebelelementen (38, 40) umfasst.

3. Parksperre (10) nach Anspruch 2,
**dadurch gekennzeichnet, dass**
die Halteeinrichtung (34) wenigstens ein Sperrelement (48) umfasst, mittels welchem die Hebelanordnung (36) in wenigstens einer der Sicherungsstellungen gegen eine Verstellung in die entsprechend andere Sicherungsstellung gesperrt ist.

4. Parksperre (10) nach einem der Ansprüche 2 oder 3,
**dadurch gekennzeichnet, dass**
die Halteeinrichtung (34) wenigstens ein Betätigungselement (60) aufweist, mittels welchem die Hebelanordnung (36) von wenigstens einer der Sicherungsstellungen in die entsprechend andere Sicherungsstellung verstellbar ist.

5. Parksperre (10) nach Anspruch 4,
**dadurch gekennzeichnet, dass**
das Betätigungselement (60) ein Federelement (60) oder ein Magnet oder ein Stellglied (48), insbesondere ein Elektromagnet (48), ist.

6. Parksperre (10) nach einem der Ansprüche 4 oder 5 in dessen Rückbezug auf Anspruch 3,
**dadurch gekennzeichnet, dass**
das Sperrelement (48) als das Betätigungselement (60) ausgebildet ist.

7. Parksperre (10) nach einem der Ansprüche 2 bis 6,
**dadurch gekennzeichnet, dass**
die erste Sicherungsstellung bezogen auf eine Verstellung der Hebelanordnung (36) aus der zweiten in die erste Sicherungsstellung eine Vortotpunktlage der Hebelanordnung (36) ist.

8. Parksperre (10) nach einem der Ansprüche 2 bis 7,
**dadurch gekennzeichnet, dass**
die zweite Sicherungsstellung bezogen auf eine Verstellung der Hebelanordnung (36) aus der ersten in die zweite Sicherungsstellung eine Totpunktlage oder eine Übertotpunktlage der Hebelanordnung (36) ist.

9. Parksperre (10) nach einem der Ansprüche 2 bis 8,
**dadurch gekennzeichnet, dass**
wenigstens ein Hebelelement (38, 40) der Hebelanordnung (36) in wenigstens einer der Sicherungsstellungen an zumindest einem Anschlag (66, 68) anliegt.

10. Parksperre (10) nach Anspruch 9,
**dadurch gekennzeichnet, dass**
der Anschlag (66, 68), an welchen das eine Hebelelement (38) anliegt, am entsprechend anderen Hebelelement (40) vorgesehen ist.

## Claims

1. A parking lock (10) for a gearbox, in particular an automatic gearbox of a motor vehicle, having at least one locking member adjustable between at least release position and at least one locking position, by means of which locking member in the locking position at least one gear element of the gearbox is locked against rotation, and having a holding device (34) having at least one safety position, by means of which holding device the locking member is secured in the at least one safety position of the holding device (34) against a movement out of the release position into the locked position
**characterized in that**
the holding device (34) has at least one second safety position, in which the locking member is secured by means of the holding device (34) against a movement out of the locked position into the release position.

2. A parking lock (10) according to claim 1,
**characterized in that**
the holding device (34) comprises a lever assembly (36) adjustable between the safety positions, in particular a toggle lever assembly (36), having a least two lever elements (38, 40) flexibly coupled with each other.

3. A parking lock (10) according to claim 2,
**characterized in that**
the holding device (34) comprises at least one locking element (48), by means of which the lever assembly (36) is locked in at least one of the safety positions against an adjustment into the corresponding other safety position.

4. A parking lock (10) according to one of claims 2 or 3,
**characterized in that**
the holding device (34) has at least one actuating element (60), by means of which the lever assembly (36) is adjustable from at least one of the safety positions into the corresponding other safety position.

5. A parking lock (10) according to claim 4,
**characterized in that**
the actuating element (60) is a spring element (60) or a magnet or an actuator (48), in particular, a electromagnet (48).

6. A parking lock (10) according to one of claims 4 or 5 in its reference to claim 3,
**characterized in that**
the locking element (48) is designed as the actuating element (60).

7. A parking lock (10) according to one of claims 2 to 6,
**characterized in that**
the first safety position related to an adjustment of the lever assembly (36) from the second into the first safety position is a front dead point position of the lever assembly (36).

8. A parking lock (10) according to one of claims 2 to 7,
**characterized in that**
the second safety position related to an adjustment of the lever assembly (36) from the first into the second safety position is a dead point position or a top dead point position of the lever assembly (36).

9. A parking lock (10) according to one of claims 2 to 8,
**characterized in that**
at least the lever element (38, 40) of the lever assembly (36) abuts in at least one of the safety positions against at least one limit stop (66, 68).

10. A parking lock (10) according to claim 9,
**characterized in that**
the limit stop (66, 68), against which the one lever element (38) abuts, is provided on the corresponding other lever element (40).

## Revendications

1. Frein de stationnement (10) pour une boîte de vitesses, notamment pour une boîte de vitesses automatique, d'un véhicule automobile, avec au moins un élément de blocage qui est déplaçable entre au moins une position libre et au moins une position bloquée et au moyen duquel, dans la position bloquée, au moins un élément de transmission de la boîte de vitesses est bloqué contre toute rotation et avec un dispositif de retenue (34) qui comporte au moins une position de sécurité et au moyen duquel, dans l'au moins une position de sécurité du dispositif de retenue (34), l'élément de blocage est sécurisé contre tout mouvement hors de la position libre vers la position bloquée,
**caractérisé en ce que** le dispositif de retenue (34) comporte au moins une deuxième position de sécurité dans laquelle l'élément de blocage est sécurisé au moyen du dispositif de retenue (34) contre tout mouvement hors de la position bloquée vers la position libre.

2. Frein de stationnement (10) selon la revendication 1, **caractérisé en ce que** le dispositif de retenue (34) comprend un dispositif à levier (36) déplaçable entre les positions de sécurité, notamment un dispositif à levier coudé (36), avec au moins deux éléments de levier (38, 40) couplés ensemble de manière articulée.

3. Frein de stationnement (10) selon la revendication 2, **caractérisé en ce que** le dispositif de retenue (34) comprend au moins un élément de blocage (48) au moyen duquel le dispositif à levier (36) est bloqué dans au moins une des positions de sécurité contre un déplacement dans l'autre position de sécurité respective.

4. Frein de stationnement (10) selon l'une des revendications 2 ou 3, **caractérisé en ce que** le dispositif de retenue (34) comporte au moins un élément d'actionnement (60) au moyen duquel le dispositif à levier (36) est déplaçable d'au moins une des positions de sécurité vers l'autre position de sécurité respective.

5. Frein de stationnement (10) selon la revendication 4, **caractérisé en ce que** l'élément d'actionnement (60) est un élément à ressort (60) ou un aimant ou un élément de réglage (48), notamment un électroaimant (48).

6. Frein de stationnement (10) selon l'une des revendications 4 ou 5 en relation avec la revendication 3, **caractérisé en ce que** l'élément de blocage (48) est conçu comme élément d'actionnement (60).

7. Frein de stationnement (10) selon l'une des revendications 2 à 6, **caractérisé en ce que**, par rapport à un déplacement du dispositif à levier (36) de la deuxième position de sécurité vers la première position de sécurité, la première position de sécurité est une position d'avant point mort du dispositif à levier (36).

8. Frein de stationnement (10) selon l'une des revendications 2 à 7, **caractérisé en ce que**, par rapport à un déplacement du dispositif à levier (36) de la première position de sécurité vers la deuxième position de sécurité, la deuxième position de sécurité est une position de point mort ou une position d'après point mort du dispositif à levier (36).

9. Frein de stationnement (10) selon l'une des revendications 2 à 8, **caractérisé en ce qu'**au moins un élément de levier (38, 40) du dispositif à levier (36) dans au moins une des positions de sécurité se trouve contre au moins une butée (66, 68).

10. Frein de stationnement (10) selon la revendication 9, **caractérisé en ce que** la butée (66, 68), contre laquelle se trouve l'élément de levier (38), est prévue au niveau de l'autre élément de levier respectif (40).
